# EUROPEAN PATENT SPECIFICATION

(11) **EP 1 150 572 B1**
(45) Date of publication and mention of the grant of the patent: **31.03.2004**
(21) Application number: 00904125.2
(22) Date of filing: 28.01.2000
(51) Int. Cl.: A22C 11/00

(54) **APPARATUS FOR MANUFACTURING CO-EXTRUDED FOOD PRODUCTS AND METHOD FOR MANUFACTURING A CO-EXTRUDED FOOD PRODUCT**
APPARAT UND VERFAHREN ZUM HERSTELLEN VON KOEXTRUDIERTEN NAHRUNGSMITTELN
APPAREIL ET PROCEDE DE PREPARATION DE PRODUITS ALIMENTAIRES CO-EXTRUDES

(30) Priority: 01.02.1999 NL 1011187; 19.04.1999 NL 1011830
(43) Date of publication of application: 07.11.2001
(73) Proprietor: TOWNSEND ENGINEERING COMPANY, Des Moines, IA 50317 (US)
(72) Inventor: VAN DEN DUNGEN, Wilhelmus, Johannes, Everardus, NL-5464 PK Veghel (NL); BERGMANS, Peter, Johannes, Christoffel, Maria, NL-4854 MH Bavel (NL)
(74) Representative: Van den Heuvel, Henricus Theodorus
(86) International application number: PCT/NL2000/000060
(87) International publication number: WO 2000/044233

(56) References cited:
- WO-A-93/12660
- WO-A-98/16115
- WO-A-99/13729
- FR-A- 2 270 797
- NL-A- 9 201 307
- US-A- 3 624 774

## Description

The present invention relates to an apparatus for manufacturing co-extruded food products, in particular sausage, at least comprising co-extrusion means for forming a continuous string of a food product which is provided all around with a substantially uniform collagen layer; a transporting device for transporting the food product; and means for supplying coagulants to the food products while these are being transported by the transporting device.

Such an apparatus is known for instance from the International patent application WO 98/16115. The transporting device of this apparatus comprises a downward inclining conveyor belt over which a continuous extruded (sausage) string is moved. Placed above the conveyor belt are a number of spray nozzles which supply coagulants in the form of a brine solution to and bring it into contact with the sausage string. The transporting speed applied here is roughly equal to the speed of co-extrusion and amounts to about 1 metre per second.

Co-extruded food products are products wherein a food product string and a covering layer arranged uniformly therearound are extruded simultaneously. This covering layer normally comprises a collagen gel which subsequently has to be subjected to a coagulation treatment to remove the water from the collagen gel and to cause the collagen to solidify and stabilize.

A known method of removing water from the collagen layer is by making use of drying towers or chambers in which the co-extruded food products are exposed to heat to thus remove the water from the collagen layer. However, not only is said method very time-consuming and expensive, it is also energetically unattractive because of the required heating phase which is usually followed by a cooling step.

Another method of bringing about removal of water from the collagen gel is to place coagulants in the form of concentrated salt solutions in contact with the collagen layer so that water is removed from the layer by means of osmosis. Such concentrated salt solutions comprise for instance concentrated sodium chloride solutions.

The removal of water from the collagen gel can also be realized by bringing the gel into contact with a solution which changes the pH of the collagen gel. The water-absorption capacity of the gel can hereby be reduced so that water is removed from the gel as a result.

A stabilization of the collagen layer can be achieved by cross-linking thereof. Cross-linking of the collagen gel is usually brought about by adding cross-linking agents to the collagen gel either during or after extrusion thereof.

These latter methods of removing water from the collagen layer by making use of coagulants which are brought into contact with the collagen layer are for instance known from WO 93/12660 and the above mentioned application WO 98/16115.

In WO 93/12660 is described a method for manufacturing a co-extruded sausage, comprising the steps of co-extruding the sausage string with the collagen layer and causing the collagen layer to coagulate chemically by making use of a chemical coagulant and in the absence of hot air drying. For this purpose the co-extruded sausage string is guided through a so-called elongate brining bath in which coagulation of the collagen takes place. In the apparatus applied in WO 93/12660 use is made of a spiral-shaped tube with a length of 10 to 50 m as brining bath.

The drawbacks of this latter apparatus are stated in WO 98/16115 and include the fact that the sausage string has an uneven diameter as a result of extending unevenly over the length direction. The residence time in the salt solution moreover differs along the length, which results in a difference in uniformity of the collagen casing. The very limited accessibility of the sausage string is also mentioned as a disadvantage.

The invention described in WO 98/16115 has the object of providing an apparatus which obviates the above stated drawbacks. However, the apparatus according to WO 98/16115 likewise has a number of significant drawbacks. The conveyor belt, and therewith the sausage transported thereover, is still difficult to access in the case of process breakdown and for the purpose of maintenance. The contact between the coagulants and the sausage for coagulating moreover takes place in uncontrolled and incomplete manner. This is caused because the coagulants distributed by the spray nozzles only come to rest on the upward facing side of the sausage. The spray nozzles are moreover situated at only a limited number of specific locations. The continuous sausage string should also turn over while moving through the bend in the conveyor belt so that a treatment of the underside of the sausage string can take place. This movement is however very uncontrolled and will either occur not at all or only to a very limited extent, and in any case not consistently. Using the known apparatus no uniform distribution of coagulants over the sausage string can thus be guaranteed, and therefore no adequate coagulation thereof.

The present invention has for its object to obviate the above stated drawbacks and provides for this purpose an apparatus according to the preamble which is characterized in that the apparatus is provided with a separating device for separating the string of food product in separate units which is placed upstream relative to the transporting device, and that the transporting device comprises a transporting member which is provided with carriers for the separate units of food product.

In the apparatus according to the present invention the string of food product is separated into separate units before being subjected to a coagulation treatment. The use of such separate units enables a better control over the movement of these units in comparison with a continuous string. Owing to this controlled movement, the separate units received in carriers can moreover come into contact with the supplied coagulants substantially on all sides and in homogeneous manner. Because the string of food product is separated into separate units relatively shortly after the co-extrusion, it is further ensured that the separate units each have substantially the same diameter.

In order to somewhat strengthen the collagen layer before the string of food product is separated into separate units using the separating device, the apparatus according to the present invention is preferably provided with means for supplying pretreatment coagulants to the co-extruded string of food product, which means are placed upstream of the separating device.

Such means can for instance comprise a bath or channel through which the co-extruded sausage string is advanced and brought into contact with coagulants, such as for instance a concentrated sodium chloride solution.

In particular the carriers comprise substantially gutter-shaped elements and these have a direction of movement extending transversely of their longitudinal axis.

In such an embodiment the separate units of food product are preferably accommodated lying mutually in line adjacently of each other in the carriers and likewise advanced transversely of their longitudinal direction.

The apparatus according to the present invention is advantageously also provided with a transfer device, using which the separate units are transferred into the carriers.

To enhance passage of the coagulants the carriers preferably comprise mesh-like walls.

In order to prevent the food products being able to roll or float out of the carrier, the carriers largely enclose the food products in an advantageous embodiment.

In an advantageous embodiment the carriers are substantially completely closable.

This prevents the separate units of food product being able to fall out of the carriers during transport. Closure of the carriers can be effected by a removable cover which forms part of the carrier. Another option is that the carrier is closed by means of a fixed cover plate.

In a preferred embodiment the transporting member runs at least partially through a zigzag-shaped route, wherein the respective route sections extend at least partially in vertical direction.

By covering such a route a relatively long distance can be covered in a relatively small space for a relatively long treatment time. Furthermore, such a route considerably improves the accessibility of the food products compared to the known apparatus.

The route is preferably such that the angle between an ascending and descending path, and vice versa, amounts to 45-75° and preferably 60°.

In the case of such a route the separate units of food product will be rotated optimally in the carriers, so that substantially all sides of the units will be directed upward at some point. The accessibility of the carriers moreover remains optimal in this situation.

The carriers are advantageously coupled to the transporting member by means of a rigid coupling.

In the case the transporting member covers the above stated zigzag-shaped route, the rigid coupling has the advantage that the respective carriers will rotate on their axis during transport. The food products received in each carrier will hereby rotate over the bottom thereof, thus ensuring a uniform distribution of coagulants over the outer surface of these products.

In an advantageous embodiment the means for supplying coagulants are placed above the path of the carriers.

As already set forth in the foregoing, the controlled movement of the separate units of food product in the carriers ensures that they come into contact on all sides with the coagulants supplied from above.

The means for supplying coagulants are advantageously embodied such that the food products are sprinkled by the coagulants.

An even distribution of the coagulants over the outside of the food products can be achieved with such a sprinkling.

The means for supplying coagulants preferably comprise spray nozzles.

These spray nozzles can for instance be coupled to a feedback conduit, so that already sprayed and collected coagulants can be used a number of times. If desired, the spray nozzles can be connected to mutually different feed conduits for coagulants. The food products can thus be brought into contact in the transporting device with a plurality of coagulants of differing composition. This can be advantageous in bringing about an optimal coagulation of the collagen layer around the food product. A treatment of the food product can also take place for instance at the end of the route of the transporting member, wherein for instance undesired flavours or effects, such as for instance crystal-formation, which are caused by coagulant, are neutralized with a neutralizing agent such as water.

In particular, the means for supplying coagulants extend substantially over the length of the carriers.

Thus is ensured that separate units of food product placed mutually in line are each brought sufficiently into contact with a determined quantity of coagulant.

In another advantageous embodiment the apparatus comprises one or more containers for coagulants, wherein the route of the transporting member is such that the carriers run at least partially through the one or more containers.

In such an embodiment the food products situated in the carriers are immersed in the coagulants. In such an embodiment of the apparatus carriers are preferably used which are substantially completely closable.

The carriers can be closed by using a cover; another preferred option is that the carriers are guided with the open side along a stationary plate, wherein the plate functions as cover.

In order to ensure that the collagen layer of the food products is treated with different coagulants, the latter embodiment of the apparatus according to the present invention comprises at least two containers, wherein the containers contain at least two mutually differing coagulants.

The present invention also relates to a transporting device which is suitable for use in an apparatus for manufacturing co-extruded food products according to the present invention.

The present invention likewise relates to means for supplying coagulants to the food products which are suitable for use in an apparatus for manufacturing co-extruded food products according to the present invention.

The present invention further relates to a method for manufacturing a co-extruded food product, in particular sausage, comprising the steps of co-extruding a continuous string of a food product which is provided all around with a substantially uniform collagen layer; and causing the collagen gel to coagulate under the influence of coagulants, whereafter the final co-extruded food product is obtained.

This method is characterized in that the method comprises the further step of separating the string of food product into separate units before these are subjected to the coagulation treatment.

As already set forth in the foregoing, the separating of the continuous string of food product into separate units enables a better handling and more precise control of the movement thereof, so that an even distribution of coagulants over the collagen layer can be realized.

The above stated method particularly comprises the further step of subjecting the food product to a pre-coagulation treatment after the co-extrusion step, wherein the collagen layer is brought into contact with pre-treatment coagulants.

By means of such a treatment it is possible, if desired, to already impart a determined strength to the collagen layer. The strength of the collagen layer is preferably sufficient herein for the separation of the food product into separate units.

The collagen layer is preferably formed from collagen gel to which dry collagen is added. This dry collagen is advantageously added to the collagen gel during the co-extrusion. This dry collagen particularly has a fibrous structure.

The addition of dry collagen to the collagen gel increases the percentage dry substance content in the collagen layer during co-extrusion. Drying and solidifying of the collagen layer can hereby take place in a shorter time. The added dry collagen fibres not only absorb water so that the drying time is shortened, they also contribute, due to their structure, toward the strength of the collagen skin to be finally obtained around the extrusion product. The dry collagen can be present as such in the raw material for the collagen layer around the food product; another option is that dry collagen be added to the collagen gel during the co-extrusion process.

The collagen layer around the final co-extruded food product advantageously comprises 6.5 to 15% by weight collagen, preferably 7 to 12% by weight collagen and with particular preference 8 to 10% by weight collagen.

In an advantageous embodiment the coagulants comprise a carbonate solution, a liquid smoke, a potassium phosphate solution or mixtures thereof.

The use of such solutions is found to result in a more rapid moisture removal from the collagen gel. The potassium phosphate solution preferably comprises dipotassium monohydrogen phosphate.

Finally, the present invention relates to a method for coagulating the collagen layer of a co-extruded food product which is suitable for use in an above stated method for manufacturing a co-extruded food product according to the present invention.

The present invention will be further elucidated hereinbelow with reference to the annexed drawing, in which:
- figure 1: shows schematically and partly in cross-section a side view of a part of the apparatus for manufacturing co-extruded food products according to the present invention;
- figure 2: shows a schematic top view of the apparatus according to figure 1;
- figure 3: shows schematically a carrier as used in the apparatus according to the present invention; and
- figure 4: shows schematically in cross-section a side view of a number of carriers coupled to a transporting member, wherein separate units of food product are received in the carriers.

The figures are purely schematic and not drawn to scale. Some dimensions in particular are shown greatly exaggerated for the sake of clarity.

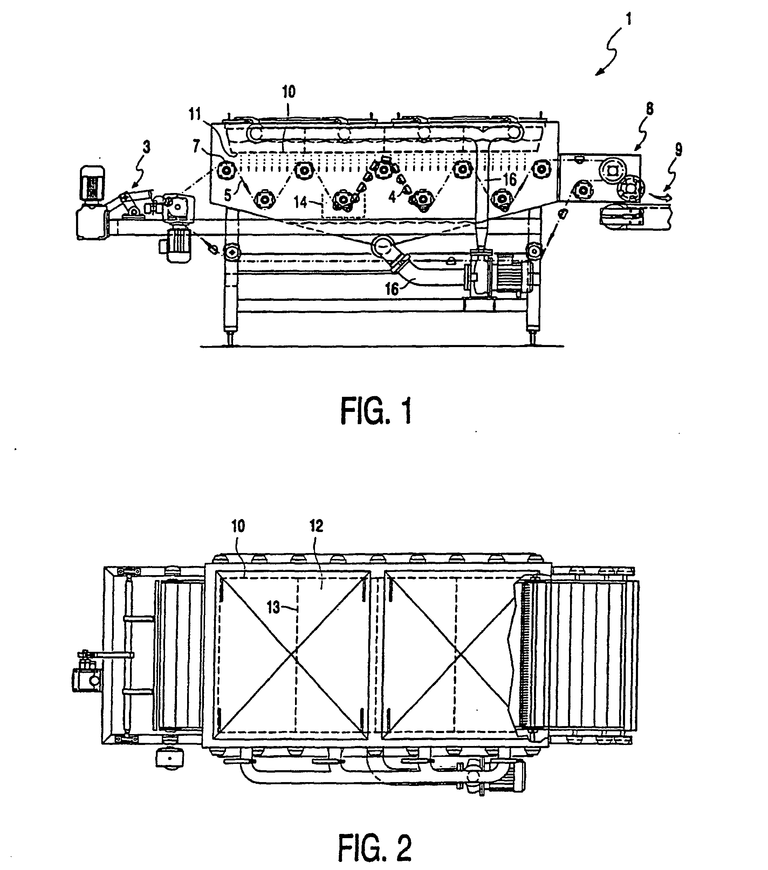

Figures 1 and 2 shows a part of the apparatus 1 for manufacturing co-extruded food products according to the present invention. This apparatus comprises co-extrusion means - not shown in the figure - for forming of a continuous string of a food product which is provided all around with a substantially uniform collagen layer. This continuous string is subsequently separated into separate units using a separating device or crimper wheel - not shown in the figure. A crimper wheel comprises a wheel which is provided along the periphery thereof with a number of protruding elements. The continuous string of food product is carried along the periphery of the crimper wheel and the protruding elements engage the string and clamp it, so that the units are mutually separated. In most cases the casing - or collagen layer - will herein be closed at this position.

In order to strengthen the collagen layer somewhat before the string of food product is separated into separate units using the crimper wheel, the apparatus can be provided with means for supplying pretreatment coagulants to the co-extruded string of food product. These means are placed between the co-extrusion means and the separating device and are not shown in the figure.

After the continuous string of food product has been separated into separate units, these separate units are transferred into the transporting device using a transfer device 3. The separate units of food product are herein normally transferred into carriers 4 of the transporting device by means of a scooping movement.

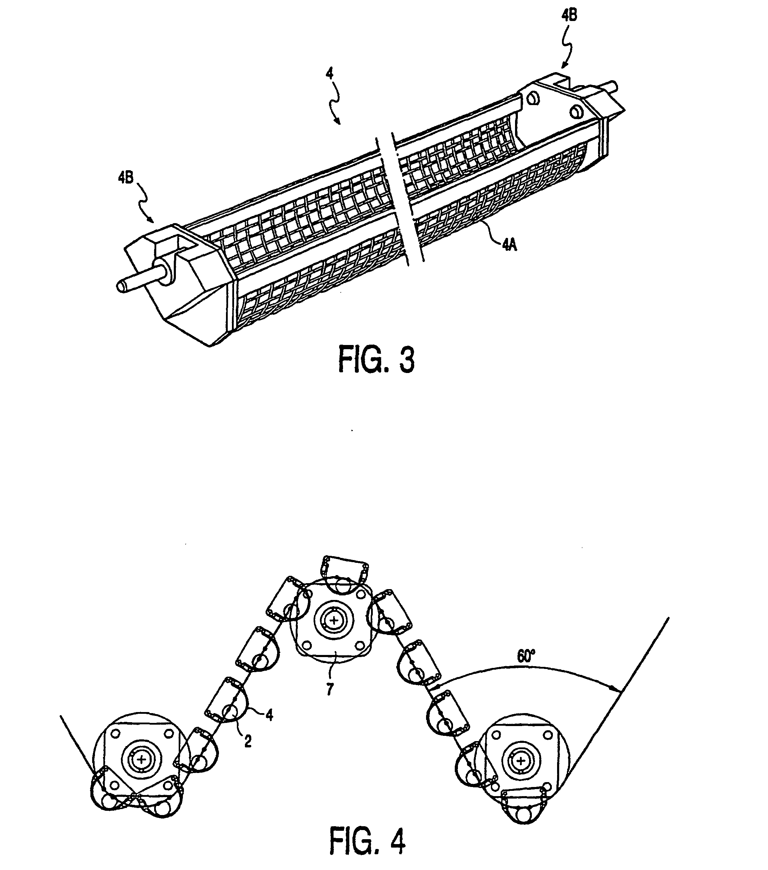

Carriers 4 of the transporting device are coupled to a transporting member 5. This latter can for instance comprise a chain; other embodiments of the transporting member known to the skilled person are of course also possible. The embodiment of the respective carriers is further elucidated in figures 3 and 4.

As shown clearly in figure 3, carrier 4 comprises a gutter-shaped element comprising substantially mesh-like walls. Depending on the length of the carriers one or more separate units 2 of food product will be received in each carrier. Due to their form the carriers will largely enclose the separate units of food product. In the embodiment shown in figure 3 the outer ends of the carrier comprise closed walls; these can however also be embodied in mesh form. In order to provide even more certainty against the separate units of food product falling or floating out in undesired manner, the carriers can be embodied or the apparatus can be embodied such that the carriers are substantially closable. For this purpose carriers 4 can each be provided with a removable cover - not shown in the figure - which is for instance connected hingedly to the carrier. Another option is that the carriers are fed through beneath a stationary plate - not shown in the figure - during transport, wherein this plate serves as closure of the carriers.

Carriers 4 are coupled on or close to their outer ends to a transporting member 5. In the embodiment shown in figure 4 the carriers are connected on both sides to a transporting member 5 by means of a rigid connection. During movement of the transporting member the carriers 4 move in the direction extending transversely of their longitudinal axis.

As shown clearly in figure 1, the transporting member runs at least partially through a zigzag-shaped route, wherein the respective route sections extend at least partially in vertical direction. With such a route a relatively large distance can be covered in a relatively small space. The carriers with the separate units are moreover always readily accessible in the case of maintenance and/or breakdowns. In order to realize this route the transporting members 5 are guided with carriers 4 over guide elements 7. After passing through the zigzag-shaped route, the separate units of food product are carried out of carriers 4 using two mutually co-acting guide elements 8 and finally discharged at discharge station 9.

A particularly favourable situation is achieved when the route is such that the angle between the ascending and descending path, and vice versa, amounts to 60°. This is further elucidated in figures 1 and 4. The separate units 2 in carriers 4 will herein be optimally rotated so that substantially all sides of units 2 will be directed upward at some point. The accessibility of the carriers moreover remains optimal in this situation.

It is of course also possible to guide carriers 4 along a different route or at another angle. A change in the number of degrees which the angle makes will of course have consequences for the number of rotations of the separate sausage units.

The apparatus 1 is also provided with means for supplying coagulants to the food products while these are being transported by the transporting device. In the embodiment shown in figure 1 these means comprise a plate 10 which is provided with standing edges, wherein the bottom of the plate is provided with perforations 11, and which is placed above the path of the carriers. Through supply of coagulants to plate 10 these will be sprinkled over carriers 4 and the separate units accommodated therein.

The supplied coagulants can be collected after use and fed back to plate 10 via feedback conduit 16.

When it is desired to have different coagulants come into contact with the collagen layer of the separate units of food product, these agents can be supplied simultaneously at different locations. For this purpose the plate 10 is provided in an advantageous embodiment with partition walls 13 and thus separated into compartments 12 which are indicated in figure 2. By providing each of the different compartments 12 with a different coagulant, these latter are supplied simultaneously at different positions. It is of course also possible to distribute other liquids, such as for instance water, instead of coagulants.

Other embodiments of the above stated means are of course also possible. Instead of the above stated distribution of coagulants without pressure, use can thus be made of spray nozzles operating under pressure. A better distribution of the coagulants can be achieved through the use of such spray nozzles. Different coagulants or other liquids can be sprayed by connecting different spray nozzles to different feed conduits.

Another way of bringing the coagulants into contact with the separate units of food product is to provide apparatus 1 with one or more containers 14 for coagulants, wherein the route of transporting member 5 is such that carriers 4 run at least partially through the one or more containers 14.

In this case the carriers 4 with separate units 2 are thus immersed in the containers 14 with coagulant. Such a container 14 is indicated in figure 1 with broken lines. The separate units 2 can also be brought into contact with different agents by placing a plurality of containers with different coagulants in the apparatus.

The operation of the apparatus for manufacturing co-extruded food products 1 according to the present invention is as follows. A continuous string of a food product, which is provided all around with a substantially uniform collagen layer, is first co-extruded using the co-extrusion means present for this purpose. In order to shorten the drying and solidifying time thereof, a determined quantity of dry collagen can be added to the collagen gel. This dry collagen may also be already present in the raw material for the collagen layer. Another option is for dry collagen to be added to the collagen gel during co-extrusion. The increase in the quantity of collagen in the collagen layer can also increase the strength thereof. Before the string is separated into separate units using a separating device, the continuous string of food product is treated with coagulants subject to the strength of the collagen layer after co-extrusion. This first treatment with coagulant can be carried out with for instance a concentrated sodium chloride solution. After the string has then been separated into separate units 2 using the separating device, usually a crimper wheel, these units are transferred into respective carriers 4 using a transfer device 3.

How many units 2 are received in a carrier 4 is determined subject to the lengths of carrier 4 and separate units 2. Separate units 2 are usually placed in lengthwise direction of each other in carriers 4. Separate units 2 are subsequently transported over a determined route in carriers 4 while coagulants are supplied. These coagulants can comprise different solutions, such as for instance a sodium chloride solution, but they preferably comprise a carbonate solution, a liquid smoke, a potassium phosphate solution or mixtures thereof. In particular preference the coagulants comprise dipotassium monohydrogen phosphate. Under the influence of the coagulants water is removed from the collagen layer by means of osmosis so that it dries and solidifies. After moving through the route the separate units 2 are removed from carriers 4 and subsequently discharged.

## Claims

1. Apparatus (1) for manufacturing co-extruded food products, in particular sausage, at least comprising:
- co-extrusion means for forming a continuous string of a food product which is provided all around with a substantially uniform collagen layer;
- a transporting device for transporting the food product; and
- means for supplying coagulants to the food products while these are being transported by the transporting device,
**characterized in that** the apparatus (1) is provided with a separating device for separating the string of food product into separate units (2) which is placed upstream relative to the transporting device, and that the transporting device comprises a transporting member (5) which is provided with carriers (4) for the separate units (2) of food product.

2. Apparatus (1) as claimed in claim 1, **characterized in that** the apparatus (1) is provided with means for supplying pretreatment coagulants to the co-extruded string of food product, which means are placed upstream of the separating device.

3. Apparatus (1) as claimed in claim 1 or 2, **characterized in that** the carriers (4) comprise substantially gutter-shaped elements and have a direction of movement extending transversely of their longitudinal axis.

4. Apparatus (1) as claimed in one or more of the claims 1-3, **characterized in that** the carriers (4) comprise mesh-like walls.

5. Apparatus (1) as claimed in one or more of the claims 1-4, **characterized in that** the carriers (4) largely enclose the food products.

6. Apparatus (1) as claimed in one or more of the claims 1-5, **characterized in that** the carriers (4) are substantially completely closable.

7. Apparatus (1) as claimed in one or more of the claims 1-6, **characterized in that** the transporting member (5) runs at least partially through a zigzag-shaped route, wherein the respective route sections extend at least partially in vertical direction.

8. Apparatus (1) as claimed in claim 7, **characterized in that** the route is such that the angle between an ascending and descending path, and vice versa, amounts to 45-75°.

9. Apparatus (1) as claimed in claim 7 or 8, **characterized in that** the route is such that the angle between an ascending and descending path, and vice versa, amounts to 60°.

10. Apparatus (1) as claimed in one or more of the claims 1-9, **characterized in that** the carriers (4) are coupled to the transporting member (5) by means of a rigid coupling.

11. Apparatus (1) as claimed in one or more ofthe claims 1-10, **characterized in that** the means for supplying coagulants are placed above the path of the carriers (4).

12. Apparatus (1) as claimed in one or more of the claims 1-11, **characterized in that** the means for supplying coagulants are embodied such that the food products are sprinkled by the coagulants.

13. Apparatus (1) as claimed in one or more of the claims 1-12, **characterized in that** the means for supplying coagulants comprise spray nozzles.

14. Apparatus (1) as claimed in one or more of the claims 11-13, **characterized in that** the means for supplying coagulants extend substantially over the length of the carriers (4).

15. Apparatus (1) as claimed in one or more of the claims 1-14, **characterized in that** the apparatus (1) comprises one or more containers (14) for coagulants, wherein the route of the transporting member (5) is such that the carriers (4) run at least partially through the one or more containers (14).

16. Apparatus (1) as claimed in claim 15, **characterized in that** it comprises at least two containers (14), wherein the containers (14) contain at least two mutually differing coagulants.

17. Method for manufacturing a co· extruded food product, in particular sausage, comprising the steps of:
- co-extruding a continuous string of a food product which is provided all around with a substantially uniform collagen layer; and
- subjecting the collagen layer to a coagulating treatment under the influence of coagulants, whereafter the final co-extruded food product is obtained,
**characterized in that** the method comprises the further step of:
- separating the string of food product into separate units (2) before subjecting these to the coagulation treatment.

18. Method as claimed in claim 17, **characterized in that** the method comprises the further step of:
- subjecting the food product to a pre-coagulation treatment after the co-extrusion step, wherein the collagen layer is brought into contact with pre-treatment coagulants.

19. Method as claimed in claim 17 or 18, **characterized in that** the collagen layer is formed from collagen gel to which dry collagen is added.

20. Method as claimed in claim 19, **characterized in that** the dry collagen is added to the collagen gel during the co-extrusion.

21. Method as claimed in claim 19 or 20, **characterized in that** the dry collagen has a fibrous structure.

22. Method as claimed in one or more of the claims 17-21, **characterized in that** the collagen layer around the final co-extruded food product comprises 6.5 to 15% by weight collagen.

23. Method as claimed in one or more of the claims 17-22, **characterized in that** the collagen layer around the final co-extruded food product comprises 7 to 12% by weight collagen.

24. Method as claimed in one or more of the claims 17-23, **characterized in that** the collagen layer around the final co-extruded food product comprises 8 to 10% by weight collagen.

25. Method as claimed in one or more of the claims 17-24, **characterized in that** the coagulants comprise a carbonate solution, a liquid smoke, a potassium phosphate solution or mixtures thereof.

26. Method as claimed in one or more of the claims 17-25, **characterized in that** the coagulants comprises dipotassium monohydrogen phosphate.

27. Use of dry collagen in a method as claimed in one or more of the claims 19-26.

## Patentansprüche

1. Apparat (1) zum Herstellen von koextrudierten Nahrungsmitteln, insbesondere Würsten, mindestens bestehend aus:
- Koextrudiermitteln für die Bildung eines endlosen Nahrungsmittelstranges, der mit einer alles umgebenden im Wesentlichen gleichmäßigen Kollagenschicht versehen ist;
- einer Transporteinrichtung zum Transport des Nahrungsmittels; und
- Mitteln für die Zufuhr von Koagulierungsmitteln zu den Nahrungsmitteln, während diese durch die Transporteinrichtung transportiert werden,
**dadurch gekennzeichnet, dass** der Apparat (1) mit einer Trennvorrichtung zum Trennen des Nahrungsmittelstranges in einzelne Einheiten (2) versehen ist, die sich oberhalb der Transporteinrichtung befindet, und dass die Transporteinrichtung ein Transportglied (5) umfasst, das mit Transportbehältern (4) für die einzelnen Nahrungsmitteleinheiten (2) versehen ist.

2. Apparat (1) nach Anspruch 1, **dadurch gekennzeichnet, dass** der Apparat (1) mit Mitteln für die Zufuhr von Vorbehandlungs-Koagulierungsmittel zum koextrudierten Nahrungsmittelstrang versehen ist, welche Mittel oberhalb der Trennvorrichtung angeordnet sind.

3. Apparat (1) nach Anspruch 1 oder 2, **dadurch gekennzeichnet, dass** die Transportbehälter (4) im Wesentlichen dachrinnenförmige Elemente umfassen und eine Bewegungsrichtung quer zu ihrer Längsachse aufweisen.

4. Apparat (1) nach einem oder mehreren der Ansprüche 1-3, **dadurch gekennzeichnet, dass** die Transportbehälter (4) gitterähnliche Wände umfassen.

5. Apparat (1) nach einem oder mehreren der Ansprüche 1-4, **dadurch gekennzeichnet, dass** die Transportbehälter (4) die Nahrungsmittel weitgehend umschließen.

6. Apparat (1) nach einem oder mehreren der Ansprüche 1-5, **dadurch gekennzeichnet, dass** die Transportbehälter (4) im Wesentlichen vollständig verschließbar sind.

7. Apparat (1) nach einem oder mehreren der Ansprüche 1-6, **dadurch gekennzeichnet, dass** das Transportglied (5) wenigstens teilweise über eine zickzack-förmige Strecke verläuft, wobei die jeweiligen Streckenabschnitte sich zumindest teilweise in senkrechter Richtung erstrecken.

8. Apparat (1) nach Anspruch 7, **dadurch gekennzeichnet, dass** die Strecke so gestaltet ist, dass der Winkel zwischen einer ansteigenden und einer absteigenden Bahn, sowie umgekehrt, 45-75° beträgt.

9. Apparat (1) nach Anspruch 7 oder 8, **dadurch gekennzeichnet, dass** die Strecke so gestaltet ist, dass der Winkel zwischen einer ansteigenden und einer absteigenden Bahn, sowie umgekehrt, 60° beträgt.

10. Apparat (1) nach einem oder mehreren der Ansprüche 1-9, **dadurch gekennzeichnet, dass** die Transportbehälter (4) mit dem Transportglied (5) mit Hilfe einer starren Kupplung verbunden sind.

11. Apparat (1) nach einem oder mehreren der Ansprüche 1-10, **dadurch gekennzeichnet, dass** die Mittel für die Zufuhr von Koagulierungsmittel sich oberhalb der Bahn der Transportbehälter (4) befinden.

12. Apparat (1) nach einem oder mehreren der Ansprüche 1-11, **dadurch gekennzeichnet, dass** die Mittel für die Zufuhr von Koagulierungsmittel in einer Weise verwirklicht werden, dass die Nahrungsmittel von dem Koagulierungsmittel besprüht werden.

13. Apparat (1) nach einem oder mehreren der Ansprüche 1-12, **dadurch gekennzeichnet, dass** die Mittel für die Zufuhr von Koagulierungsmittel Sprühdüsen umfassen.

14. Apparat (1) nach einem oder mehreren der Ansprüche 11-13, **dadurch gekennzeichnet, dass** die Mittel für die Zufuhr von Koagulierungsmittel sich im Wesentlichen über die Länge der Transportbehälter (4) erstrecken.

15. Apparat (1) nach einem oder mehreren der Ansprüche 1-14, **dadurch gekennzeichnet, dass** der Apparat (1) einen oder mehrere Behälter (14) für Koagulierungsmittel umfasst, wobei die Strecke des Transportglieds (5) so gestaltet ist, dass die Transportbehälter (4) zumindest teilweise durch den einen oder mehrere Behälter (14) geleitet werden.

16. Apparat (1) nach Anspruch 15, **dadurch gekennzeichnet, dass** er mindestens zwei Behälter (14) umfasst, wobei die Behälter (14) mindestens zwei verschiedenartige Koagulierungsmittel enthalten.

17. Verfahren zum Herstellen eines koextrudierten Nahrungsmittels, insbesondere Wurst, das die folgenden Schritte umfasst:
- Koextrudieren eines endlosen Stranges eines Nahrungsmittels, der mit einer alles umgebenden im Wesentlichen gleichmäßigen Kollagenschicht versehen ist; und
- Unterziehen der Kollagenschicht einer Koagulationsbehandlung unter der Einwirkung von Koagulierungsmitteln, wonach das endgültige koextrudierte Nahrungsmittel erhalten wird,
**dadurch gekennzeichnet, dass** das Verfahren den weiteren Schritt umfasst:
- Trennen des Nahrungsmittelstranges in einzelne Einheiten (2), bevor diese der Koagulationsbehandlung unterworfen werden.

18. Verfahren nach Anspruch 17, **dadurch gekennzeichnet, dass** das Verfahren den weiteren Schritt umfasst:
- Unterziehen des Nahrungsmittels einer Vor-Koagulationsbehandlung im Anschluss an den Koextrusionsschritt, wobei die Kollagenschicht mit Vorbehandlungs-Koagulierungsmittel zusammengebracht wird.

19. Verfahren nach Anspruch 17 oder 18, **dadurch gekennzeichnet, dass** die Kollagenschicht aus Kollagengel gebildet wird, dem Trockenkollagen zugefügt wird.

20. Verfahren nach Anspruch 19, **dadurch gekennzeichnet, dass** das Trockenkollagen dem Kollagengel während der Koextrusion zugefügt wird.

21. Verfahren nach Anspruch 19 oder 20, **dadurch gekennzeichnet, dass** das Trockenkollagen eine Faserstruktur aufweist.

22. Verfahren nach einem oder mehreren der Ansprüche 17-21, **dadurch gekennzeichnet, dass** die Kollagenschicht um das endgültige koextrudierte Nahrungsmittel 6,5 bis 15 Gewichtsprozente Kollagen enthält.

23. Verfahren nach einem oder mehreren der Ansprüche 17-22, **dadurch gekennzeichnet, dass** die Kollagenschicht um das endgültige koextrudierte Nahrungsmittel 7 bis 12 Gewichtsprozente Kollagen enthält.

24. Verfahren nach einem oder mehreren der Ansprüche 17-23, **dadurch gekennzeichnet, dass** die Kollagenschicht um das endgültige koextrudierte Nahrungsmittel 8 bis 10 Gewichtsprozente Kollagen enthält.

25. Verfahren nach einem oder mehreren der Ansprüche 17-24, **dadurch gekennzeichnet, dass** die Koagulierungsmittel aus einer Karbonatlösung, Flüssigrauch, Kaliumphosphatlösung oder Mischungen hiervon bestehen.

26. Verfahren nach einem oder mehreren der Ansprüche 17-25, **dadurch gekennzeichnet, dass** die Koagulierungsmittel aus Dikalium-Monohydrogenphosphat bestehen.

27. Die Verwendung von Trockenkollagen in einem Verfahren nach einem oder mehreren der Ansprüche 19-26.

## Revendications

1. Appareil (1) pour fabriquer des produits alimentaires co-extrudés, en particulier de la saucisse, constitué au moins :
- de moyens de co-extrusion pour former une chaîne continue d'un produit alimentaire qui est pourvue sur tout son pourtour d'une couche sensiblement uniforme de collagène ;
- d'un dispositif de transport pour transporter le produit alimentaire, et
- de moyens pour amener des coagulants jusqu'aux produits alimentaires pendant que ceux-ci sont transportés par le dispositif de transport,
**caractérisé en ce que** l'appareil (1) est pourvu d'un dispositif de séparation pour séparer la chaîne du produit alimentaire en unités séparées (2) qui est placé en amont par rapport au dispositif de transport et **en ce que** le dispositif de transport comprend un organe de transport (5) qui est pourvu de supports (4) pour les unités séparées (2) du produit alimentaire.

2. Appareil (1) selon la revendication 1, **caractérisé en ce que** l'appareil (1) est pourvu de moyens pour amener des coagulants de prétraitement jusqu'à la chaîne co-extrudée de produit alimentaire, lesquels moyens sont placés en amont du dispositif de séparation.

3. Appareil (1) selon la revendication 1 ou 2, **caractérisé en ce que** les supports (4) sont constitués par des éléments sensiblement en forme de gouttière et **en ce qu'**ils ont un sens de déplacement s'étendant transversalement à leur axe longitudinal.

4. Appareil (1) selon l'une ou plusieurs des revendications 1 à 3, **caractérisé en ce que** les supports (4) comportent des parois maillées.

5. Appareil (1) selon l'une ou plusieurs des revendications 1 à 4, **caractérisé en ce que** les supports (4) enclosent en grande partie les produits alimentaires.

6. Appareil (1) selon l'une ou plusieurs des revendications 1 à 5, **caractérisé en ce que** les supports (4) sont pour ainsi dire complètement fermants.

7. Appareil (1) selon l'une ou plusieurs des revendications 1 à 6, **caractérisé en ce que** l'organe de transport (5) suit au moins partiellement un parcours en zigzag, les tronçons respectifs du parcours s'étendant au moins partiellement dans le sens vertical.

8. Appareil (1) selon la revendication 7, **caractérisé en ce que** le parcours est tel que l'angle entre une trajectoire ascendante et une trajectoire descendante, et vice-versa, s'élève à 45-75°.

9. Appareil (1) selon la revendication 7 ou 8, **caractérisé en ce que** le parcours est tel que l'angle entre une trajectoire ascendante et une trajectoire descendante, et vice-versa, s'élève à 60°.

10. Appareil (1) selon l'une ou plusieurs des revendications 1 à 9, **caractérisé en ce que** les supports (4) sont couplés à l'organe de transport (5) au moyen d'un accouplement rigide.

11. Appareil (1) selon l'une ou plusieurs des revendications 1 à 10, **caractérisé en ce que** les moyens pour amener des coagulants sont placés au-dessus du trajet des supports (4).

12. Appareil (1) selon l'une ou plusieurs des revendications 1 à 11, **caractérisé en ce que** les moyens pour amener des coagulants sont réalisés de telle sorte que les produits alimentaires sont aspergés par les coagulants.

13. Appareil (1) selon l'une ou plusieurs des revendications 1 à 12, **caractérisé en ce que** les moyens pour amener des coagulants sont constitués par des buses de pulvérisation.

14. Appareil (1) selon l'une ou plusieurs des revendications 1 à 13, **caractérisé en ce que** les moyens pour amener des coagulants s'étendent essentiellement sur toute la longueur des supports (4).

15. Appareil (1) selon l'une ou plusieurs des revendications 1 à 14, **caractérisé en ce que** l'appareil (1) comprend un ou plusieurs conteneurs (14) à coagulants, le parcours de l'organe de transport (5) étant tel que les supports (4) traversent au moins partiellement le ou les conteneurs (14).

16. Appareil (1) selon la revendication 15, **caractérisé en ce qu'**il comprend au moins deux conteneurs (14), les conteneurs (14) contenant au moins deux coagulants mutuellement différents.

17. Procédé de fabrication d'un produit alimentaire co-extrudé, en particulier de la saucisse, comprenant les étapes consistant à :
- co-extruder une chaîne continue d'un produit alimentaire qui est pourvue sur tout son pourtour d'une couche sensiblement uniforme de collagène, et
- soumettre la couche de collagène à un traitement coagulant sous l'influence de coagulants, après quoi on obtient le produit alimentaire co-extrudé fini,
**caractérisé en ce que** le procédé comprend l'étape supplémentaire consistant à :
- séparer la chaîne de produit alimentaire en unités séparées (2) avant de soumettre celles-ci au traitement par coagulation.

18. Procédé selon la revendication 17, **caractérisé en ce que** le procédé comprend l'étape supplémentaire consistant à :
- soumettre le produit alimentaire à un traitement de pré-coagulation après l'étape de co-extrusion, la couche de collagène étant mise en contact avec les coagulants de prétraitement.

19. Procédé selon la revendication 17 ou 18, **caractérisé en ce que** la couche de collagène est formée de gel de collagène auquel on ajoute du collagène sec.

20. Procédé selon la revendication 19, **caractérisé en ce que** l'on ajoute le collagène sec au gel de collagène durant la co-extrusion.

21. Procédé selon la revendication 19 ou 20, **caractérisé en ce que** le collagène sec a une structure fibreuse.

22. Procédé selon l'une ou plusieurs des revendications 17 à 21, **caractérisé en ce que** la couche de collagène entourant le produit alimentaire co-extrudé fini est constituée de 6,5 à 15 % en poids de collagène.

23. Procédé selon l'une ou plusieurs des revendications 17 à 22, **caractérisé en ce que** la couche de collagène entourant le produit alimentaire co-extrudé fini est constituée de 7 à 12 % en poids de collagène.

24. Procédé selon l'une ou plusieurs des revendications 17 à 23, **caractérisé en ce que** la couche de collagène entourant le produit alimentaire co-extrudé fini est constituée de 8 à 10 % en poids de collagène.

25. Procédé selon l'une ou plusieurs des revendications 17 à 24, **caractérisé en ce que** les coagulants sont constitués par une solution de carbonate, une fumée liquide, une solution de phosphate de potassium ou leurs mélanges.

26. Procédé selon l'une ou plusieurs des revendications 17 à 25, **caractérisé en ce que** les coagulants sont constitués de phosphate dipotassique monohydrogéné.

27. Utilisation de collagène sec dans un procédé selon l'une ou plusieurs des revendications 19 à 26.
